(19) **Europäisches Patentamt European Patent Office Office européen des brevets**

(11) **EP 3 654 549 B1**

(12) **FASCICULE DE BREVET EUROPEEN**

(45) Date de publication et mention de la délivrance du brevet:
**14.07.2021 Bulletin 2021/28**

(51) Int Cl.:
***H04B 7/185*** *(2006.01)*    ***H01Q 1/32*** *(2006.01)*

(21) Numéro de dépôt: **19209213.8**

(22) Date de dépôt: **14.11.2019**

(54) **PROCEDE ET DISPOSITIF POUR CONSERVER LE POINTAGE D'UNE ANTENNE AVEC UN SATELLITE**

VERFAHREN UND VORRICHTUNG ZUM HALTEN DER AUSRICHTUNG EINER ANTENNE AUF EINEN SATELLITEN

METHOD AND DEVICE FOR CONSERVING THE POINTING OF AN ANTENNA WITH A SATELLITE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.11.2018 FR 1871833**

(43) Date de publication de la demande:
**20.05.2020 Bulletin 2020/21**

(73) Titulaires:
- **Thales**
  **92400 Courbevoie (FR)**
- **Institut National des Sciences Appliquees de Lyon (Insa Lyon)**
  **69100 Villeurbanne (FR)**
- **Ecole Centrale de Lyon**
  **69130 Ecully (FR)**
- **Centre National de la Recherche Scientifique**
  **75016 Paris (FR)**
- **UNIVERSITE CLAUDE BERNARD - LYON 1**
  **69100 Villeurbanne (FR)**

(72) Inventeurs:
- **BROUSSARD, Elliot**
  **92230 Gennevilliers (FR)**
- **LADEVEZ, Maxime**
  **92230 Gennevilliers (FR)**
- **BRUN, Xavier**
  **69621 Villeurbanne Cedex (FR)**
- **PHAM, Minh Tu**
  **69621 Villeurbanne Cedex (FR)**

(74) Mandataire: **Marks & Clerk France**
**Immeuble "Visium"**
**22, avenue Aristide Briand**
**94117 Arcueil Cedex (FR)**

(56) Documents cités:
**US-A1- 2006 273 958**

- **E. BROUSSARD ET AL.: "Hybrid satellite position estmator using self-induced dither for SATCOM on the move", PREPRINTS OF THE 20TH WORLD CONGRESS THE INTERNATIONAL FEDERATION OF AUTOMATIC CONTROL , 9 juillet 2017 (2017-07-09), pages 7208-7212, XP002793338, Toulouse Extrait de l'Internet: URL:https://hal.archives-ouvertes.fr/hal-0 1929571/document [extrait le 2019-08-01]**

**Description**

L'invention concerne un procédé et un dispositif permettant de conserver la direction de pointage d'une antenne avec un satellite. Elle est utilisée pour des communications satellite (Satcom) où les antennes peuvent être montées sur des véhicules terrestres, des aéronefs, des navires.

Pour assurer des communications par satellite sur des véhicules en mouvement, les antennes équipant ces véhicules doivent être dirigées vers un satellite. Pour cela, les antennes sont montées sur des plateformes stabilisées désignées sous l'acronyme APS (Antenna Positioning Systems). Les exigences en termes de précision de pointage dépendent de la bande de fréquence de la télécommunication, de la taille de l'antenne ainsi que de sa technologie.

Plusieurs techniques de positionnement d'antenne sont connues de l'art antérieur. Les problèmes techniques à résoudre sont d'assurer un débit de liaison satellite maximal et de ne pas émettre en direction d'un satellite voisin.

Une première technique ou « boucle ouverte » demande l'utilisation d'une centrale de navigation de précision, appelée INS (Inertial Navigation System) ou AHRS (Attitude and Heading Reference System), afin de mesurer une attitude, un cap et la position GPS. Ce procédé tient compte des positions absolues.

Une deuxième technique ou pointage en boucle fermée utilise le principe d'écartométrie, c'est-à-dire le calcul des écarts angulaires de l'antenne par rapport au satellite. Ce calcul utilise un signal qui est l'image de la qualité de la liaison, appelé signal de tracking, issu par exemple d'un récepteur de balise satellite ou d'un modem. Cette technique utilise une figure d'écartométrie, c'est-à-dire un dépointage volontairement induit à la ligne de visée de l'antenne pour faire varier le signal de tracking et ainsi estimer l'écart au satellite. La méthode en boucle fermée utilisée prend le nom de sa figure d'écartométrie. Il existe deux familles de figures : le « Step Tracking », qui injecte des mouvements intermittents et le « Conical Scan », qui injecte des mouvements continus.

Une troisième méthode est la stratégie hybride, qui juxtapose une stratégie en boucle ouverte et en boucle fermée.

Une quatrième technique décrite dans la publication de E. Broussard et al, intitulée « Hybrid satellite position estimator using self-induced dither for Satcom on the Move » présente une technique qui utilise des mesures fournies par au moins deux gyromètres positionnés sur l'embase du positionneur. Le balayage ou « scan » nécessaire pour l'estimation de la direction de pointage se fait sans mouvements volontaires de l'antenne. Les mouvements de scan sont obtenus notamment avec le bruit de mesure. Des exemples de l'art antérieur sont l'article "Hybrid satellite position estimator using self-induced dither for SATCOM on the move" de E. Broussard et al. (2017) et US2006/273958.

Les techniques mises en œuvre dans l'art antérieur présentent différents avantages, il reste toutefois quelques axes à améliorer pour optimiser la conservation de direction de pointage d'une antenne.

L'idée de la présente invention repose sur une nouvelle approche positionnant un dispositif configuré pour mesurer des vitesses angulaires situé au niveau de l'antenne même et un traitement de données approprié.

L'invention concerne un procédé pour conserver une direction de pointage d'une antenne dans l'axe d'un satellite caractérisé en ce qu'il exécute au moins les étapes suivantes :

Pour i variant de 1 à n, n étant un nombre de mesures données,
Mesurer une valeur du signal de tracking $SNR_i$ reçu depuis le satellite pour un instant donné,
Exprimer la valeur du signal de tracking $SNR_i$ en fonction des paramètres $K_1$ et $K_2$ liés au diagramme de l'antenne, d'une période de temps j, et d'une valeur de rapport signal à bruit $SNR_0$ obtenue sans dépointage volontaire de l'antenne,

$$SNR_i = K_1 \cdot \left( \varepsilon_z - d\tau \sum_{j=1}^{i-1} \dot{\varepsilon}_{zj} \right)^2 + K_2 \cdot \left( \varepsilon_y - d\tau \sum_{j=1}^{i-1} \dot{\varepsilon}_{yj} \right)^2 + SNR_0$$

avec :

$\varepsilon_z$ et $\varepsilon_y$ des valeurs d'écarts au satellite,
i variant de 1 à n, indice d'une mesure de SNR dans une fenêtre de temps donnée,
j indice de la période de temps précédente d'un indice i, on somme sur toutes les mesures précédentes,
$\dot{\varepsilon}_{zj}$ et $\dot{\varepsilon}_{yj}$ les vitesses angulaires pour au moins deux axes y et z, différents de l'axe de pointage de l'antenne vers le satellite,
$d\tau$ une période d'échantillonnage,

Définir une fonction de coût à partir de la valeur de $SNR_i$ et de sa valeur estimée $\widehat{SNR}_i$

$$\widehat{SNR}_i = K_1 \cdot \left( \hat{\varepsilon}_z - d\tau \sum_{j=1}^{i-1} \dot{\varepsilon}_{zj} \right)^2 + K_2 \cdot \left( \hat{\varepsilon}_y - d\tau \sum_{j=1}^{i-1} \dot{\varepsilon}_{yj} \right)^2 + SNR_0$$

$$Err_i = \widehat{SNR}_i - SNR$$

$$J = \sum_{j=1}^{n} (p_i \cdot Err_i)^2$$

$p_i$ est un facteur de pondération choisi par l'opérateur,

Trouver les paramètres optimaux $\hat{\varepsilon}_y$ et $\hat{\varepsilon}_z$ au sens des moindres carrés, c'est-à-dire minimisant la fonction J à chaque pas de temps,

Utiliser le résultat de la comparaison des valeurs estimées à la valeur de référence pour conserver la direction de pointage.

Selon une variante de réalisation, on exprime la valeur SNR sous la forme d'un système linéaire en regroupant les résultats des n mesures dans une première matrice A exprimant les $\sum_{j=1}^{i-1} \dot{\varepsilon}_{zj}$ et les $\sum_{j=1}^{i-1} \dot{\varepsilon}_{yj}$ et une deuxième matrice X regroupant les valeurs d'écart au satellite et la valeur de rapport signal à bruit $SNR_0$, on estime un vecteur X à partir du système linéaire Y=AX en utilisant une méthode des moindres carrés ordinaire, pour chaque nouvelle valeur de signal de balise SNR, en déduit une valeur d'écart angulaire $\hat{\varepsilon}_y$ selon l'axe y et une deuxième valeur angulaire estimée $\hat{\varepsilon}_z$ selon l'axe z :

$$Y_i = SNR_i - K_1 \cdot \left( d\tau \sum_{j=1}^{i-1} \dot{\varepsilon}_{zj} \right)^2 - K_2 \cdot \left( d\tau \sum_{j=1}^{i-1} \dot{\varepsilon}_{yj} \right)^2$$

$$W_i = \left[ -\sum_{j=1}^{i-1} \dot{\varepsilon}_{zj} \quad -\sum_{j=1}^{i-1} \dot{\varepsilon}_{yj} \quad 1 \right]$$

$$X = \left[ 2 \cdot K_1 \cdot d\tau \cdot \varepsilon_z \quad 2 \cdot K_2 \cdot d\tau \cdot \varepsilon_y \quad (SNR_0 + K_2 \cdot \varepsilon_y^2 + K_1 \cdot \varepsilon_z^2) \right]$$

avec

- $\dot{\varepsilon}_z$, $\dot{\varepsilon}_y$ : les vitesses angulaires mesurées par des gyromètres situés au niveau de l'antenne,
- $d\tau$ : la période d'échantillonnage,
- $i$ : l'indice de la mesure dans la fenêtre de temps, i e [1..$n$],
- $j$ : l'indice de la mesure précédant la mesure courante $i$,
- $n$ : le nombre de mesures utilisées dans la fenêtre de temps,

les $\mathrm{n} = \dfrac{T}{d\tau}$ mesures de $W_i$ et $Y_i$ sont regroupées dans deux matrices A et Y:

$$A = \begin{bmatrix} W_1 \\ \vdots \\ W_i \\ \vdots \\ W_n \end{bmatrix} = \begin{bmatrix} 0 & 0 & 1 \\ -\sum_{j=1}^{2} \dot{\varepsilon}_{z_J} & -\sum_{j=1}^{2} \dot{\varepsilon}_{y_J} & 1 \\ \vdots & \vdots & \vdots \\ -\sum_{j=1}^{i-1} \dot{\varepsilon}_{z_J} & -\sum_{j=1}^{i-1} \dot{\varepsilon}_{y_J} & 1 \\ \vdots & \vdots & \vdots \\ -\sum_{j=1}^{n-1} \dot{\varepsilon}_{z_J} & -\sum_{j=1}^{n-1} \dot{\varepsilon}_{y_J} & 1 \end{bmatrix}$$

$$Y = \begin{bmatrix} Y_1 \\ \vdots \\ Y_i \\ \vdots \\ Y_n \end{bmatrix}$$

On estime le vecteur X en utilisant une méthode des moindres carrés ordinaire : $\hat{X} = (A^T.A)^{-1}.A^T.Y$, $A^T$ étant la transposée de la matrice $A$,

On obtient une estimation $\widehat{\dot{\varepsilon}_y}$, $\widehat{\dot{\varepsilon}_z}$, pour chacune des vitesses angulaires $\dot{\varepsilon}_z$, $\dot{\varepsilon}_y$ à partir de l'estimation de X :

$$\hat{X} = \begin{bmatrix} \widehat{\eta_1} \\ \widehat{\eta_2} \\ \widehat{\eta_3} \end{bmatrix} = \begin{bmatrix} 2.K_1.d\tau.\widehat{\dot{\varepsilon}_z} \\ 2.K_2.d\tau.\widehat{\dot{\varepsilon}_y} \\ K_1.\widehat{\dot{\varepsilon}_z}^2 + K_2.\widehat{\dot{\varepsilon}_y}^2 + SNR_0 \end{bmatrix}$$

$$\widehat{\dot{\varepsilon}_y} = \frac{\widehat{\eta_2}}{2.K_2.d\tau} \text{ et } \widehat{\dot{\varepsilon}_z} = \frac{\widehat{\eta_1}}{2.K_1.d\tau}.$$

On prend en compte les biais de mesure des vitesses angulaires et on exécute les étapes suivantes :

$$SNR_i = K_1.\left( \varepsilon_{z_i} - d\tau \sum_{j=1}^{i-1} (\dot{\varepsilon}_{z_{m_j}}) + (i-1).d\tau.b_z \right)^2 +$$

$$K_2 \left( \varepsilon_{y_i} - d\tau \sum_{j=1}^{i-1} \left(\dot{\varepsilon}_{y_{m_j}}\right) + (i-1).d\tau.b_y \right)^2 + SNR_0$$

avec :

- $\dot{\varepsilon}_{zm},\ \dot{\varepsilon}_{ym}$ : les vitesses angulaires mesurées par les gyromètres de l'antenne,
- $b_z$, $b_y$ : les biais des gyromètres de l'antenne,
- $d\tau$ : la période d'échantillonnage,
- $i$ : l'indice de la mesure courante dans la fenêtre de temps, i e [1 ... $n$],
- $j$ : l'indice de la mesure précédant la mesure courante $i$,
- $n$ : le nombre de mesures utilisées dans la fenêtre de temps,

On détermine les estimations optimales $\widehat{\varepsilon}_z$, $\widehat{\varepsilon}_y$, $\widehat{b_z}$ et $\widehat{b_y}$ et $\widehat{SNR}_0$ des paramètres $\varepsilon_z$, $\varepsilon_y$, $b_z$, $b_y$ et $SNR_0$ au sens des moindres carrés.

L'estimation des biais se présente sous la forme d'un système linéaire dans le cas où les estimés des écarts $\widehat{\varepsilon}_z$, $\widehat{\varepsilon}_y$, sont issues d'un module de traitement de données et utilisés comme entrées de l'estimateur de biais :

$$Y_{b_i} = W_{b_i}.X_b$$

avec :

$$Y_{b_i} = SNR_i - K_1\left(\widehat{\varepsilon}_z - d\tau\sum_{j=1}^{i-1}\dot{\varepsilon}_{z\,m_j}\right)^2 - K_2\left(\widehat{\varepsilon}_y - d\tau\sum_{j=1}^{i-1}\dot{\varepsilon}_{y\,m_j}\right)^2$$

$$W_{b_i} = \left[2.K_1\left(\widehat{\varepsilon}_z - d\tau\sum_{j=1}^{i-1}\dot{\varepsilon}_{z\,m_j}\right).(i-1).d\tau \quad 2.K_2.\left(\widehat{\varepsilon}_y, - d\tau\sum_{j=1}^{i-1}\dot{\varepsilon}_{y\,m_j}\right).(i-1).d\tau \quad (i-1)^2.d\tau^2 \quad 1\right]$$

$A_b$ est la matrice regroupant $n$ lignes de $W_{b_i}$. $Y_b$ est la matrice regroupant n lignes de $Y_{b_i}$,

L'estimation $\widehat{X_b} = \left(A_b{}^T.A_b\right)^{-1}.A_b{}^T.Y_b$ permet d'estimer les biais $\widehat{b_z}$ et $\widehat{b_y}$ :

$$\widehat{X_b} = \left[\widehat{b_z} \quad \widehat{b_y} \quad (K_1.\widehat{b_z{}^2} + K_2.b_y{}^2) \quad \widehat{SNR_0}\right]^T,$$

On estime les biais $\widehat{b_z}$ et $\widehat{b_y}$, puis on calcule les vitesses angulaires, $\widehat{\dot{\varepsilon}_y}$, $\widehat{\dot{\varepsilon}_z}$

$$\widehat{\dot{\varepsilon}_{y_j}} = \dot{\varepsilon}_{y_{m_j}} - \widehat{b_y}$$

$$\widehat{\dot{\varepsilon}_{z_j}} = \dot{\varepsilon}_{z_{m_j}} - \widehat{b_z}.$$

Les deux axes y et z pour déterminer des vitesses angulaires sont choisis orthogonaux.

On peut utiliser la valeur zéro comme valeur de référence pour l'asservissement.

Selon une variante, on utilise pour l'estimation un mouvement de l'antenne en continu, généré par n'importe quel phénomène faisant bouger le faisceau de l'antenne par rapport au satellite, tel qu'un bruit de mesure, une flexibilité mécanique, une erreur d'asservissement, ou un mouvement volontaire réalisé par un opérateur.

Selon une autre variante, on estime en continu la valeur des écarts angulaires et on utilise une boucle d'asservissement pour maintenir en position l'antenne dans une direction de pointage optimale.

L'invention concerne aussi un dispositif pour conserver une direction de pointage d'une antenne dans l'axe d'un satellite caractérisé en ce qu'il comporte au moins les éléments suivants :

Un module de mesure d'une valeur d'un signal $SNR_i$ émis par le satellite pour un instant i,

Un dispositif de détermination d'au moins une première vitesse angulaire et d'au moins une deuxième vitesse angulaire au niveau de l'antenne, pour au moins deux axes y et z, non orthogonaux et différents de l'axe de pointage de l'antenne vers le satellite,

Un module de traitement des données configuré pour exécuter les étapes du procédé selon l'invention, recevant les valeurs mesurées des vitesses angulaires, la valeur du rapport signal sur bruit mesurée SNR et générant un signal de commande à un dispositif de correction des écarts angulaires.

Le dispositif utilisé pour déterminer les vitesses angulaires est un gyromètre ou comprend un estimateur de biais des mesures.

Le dispositif peut comporter une boucle d'asservissement configurée pour corriger en continu un écart angulaire.

D'autres caractéristiques et avantages de la présente invention apparaîtront mieux à la lecture de la description d'exemples de réalisation donnés à titre illustratif et nullement limitatif, annexée des figures qui représentent :

- Figure 1, un exemple de système comprenant un aéronef en communication avec un satellite,
- Figure 2, un schéma représentant le traitement des données pour conserver la direction de pointage, et
- Figure 3, une variante de réalisation permettant de calculer la valeur du biais d'une mesure.

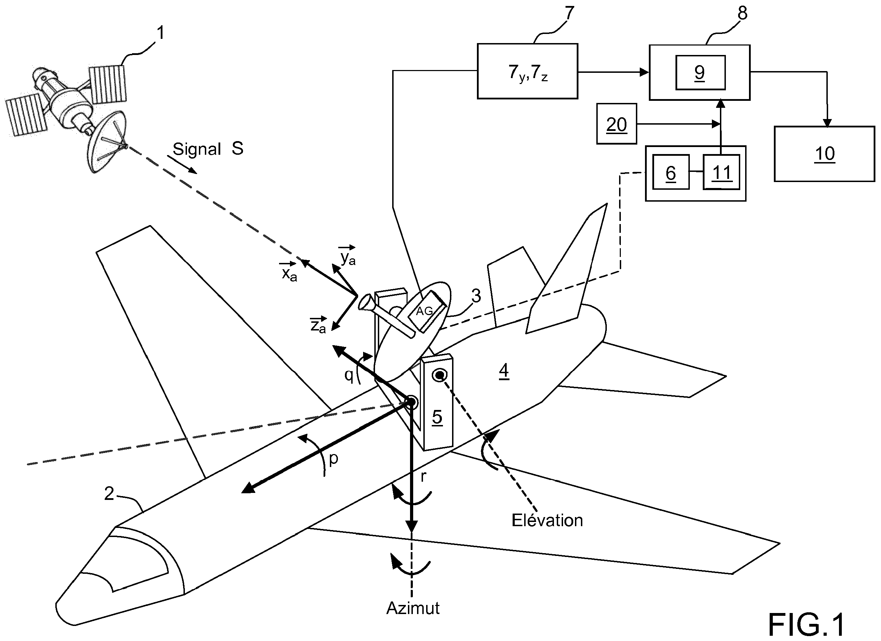

Afin de bien faire comprendre le procédé et son dispositif associé, la description qui suit est donnée, à titre d'exemple, pour un avion équipé d'une antenne de communication utilisée pour la liaison Satcom (figure 1).

Le satellite 1 émet un signal.

L'avion 2 est équipé d'une antenne 3 montée par exemple sur son fuselage 4 via un support d'antenne 5. Le montage de l'antenne et de son support est connu de l'art antérieur et ne sera pas détaillé. L'antenne est équipée d'un récepteur 6 de signal émis par le satellite.

Un dispositif 7 configuré pour mesurer des vitesses angulaires comprend, par exemple, au moins deux gyromètres 7y, 7z, qui sont associés directement à l'antenne, et qui sont fixés, par exemple, sur l'antenne. Les deux gyromètres 7y, 7z, sont en liaison avec un processeur 8 pourvu d'un module de traitement des données 9 qui va recevoir les valeurs des vitesses angulaires mesurées par les gyromètres et une mesure du facteur de qualité de la liaison satellite, ou signal de tracking, à maximiser, pour les traiter afin de fournir un signal représentatif des écarts mesurés. Le facteur de qualité peut être n'importe quel signal représentant l'image du débit de la liaison satellite. Pour une description plus concrète, l'exemple est donné pour un rapport signal à bruit SNR (Signal over Noise Ratio) issu d'un récepteur de balise satellite. Les mesures et les résultats du traitement des données seront par exemple stockés dans une mémoire 15 de l'avion. Les valeurs des écarts angulaires sont comparées à une valeur de référence, en général la valeur zéro ou une valeur voisine de zéro, le résultat étant transmis à un dispositif de correction ou de compensation d'une erreur de position angulaire 10. Le dispositif de correction va agir sur le support de l'antenne afin de maintenir le pointage de l'antenne ou le ramener dans une position optimale afin de conserver une valeur de rapport signal sur bruit SNR maximale. Le processeur 8 peut faire partie des équipements de bords de l'appareil. L'antenne est reliée à un dispositif 11 de mesure de signal balise.

Les gyromètres permettant les mesures sont positionnés directement au niveau de l'antenne et non au niveau du support d'antenne comme il est décrit dans l'art antérieur.

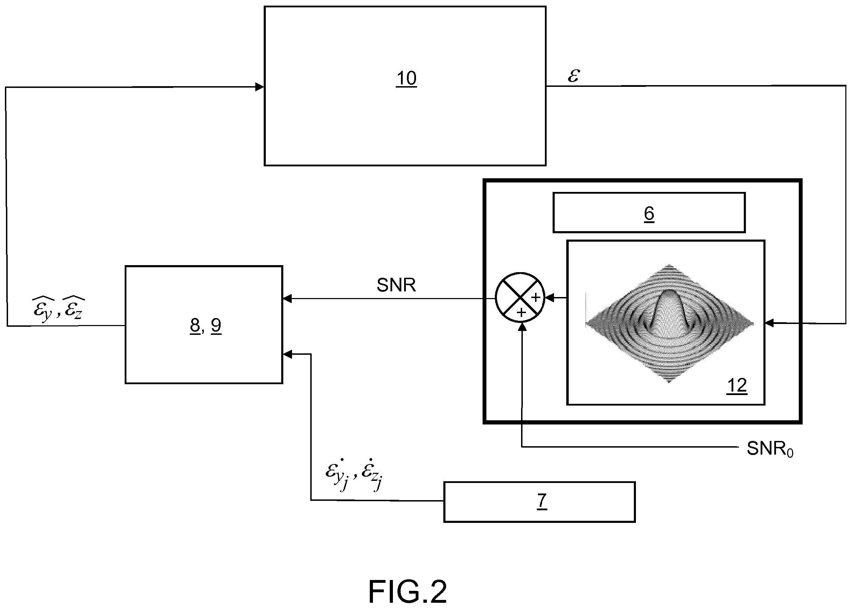

La figure 2 schématise un exemple d'enchaînement des étapes du procédé selon l'invention.

La valeur du SNR est mesurée par le récepteur 6 de signaux et transmise au processeur 8 et au module de traitement des données 9 configuré pour exécuter les étapes du procédé selon l'invention. La valeur du SNR dépend notamment d'une valeur $SNR_0$ (valeur maximale du rapport signal à bruit disponible pour le système lorsqu'il n'y a pas de dépointage).

Le module de traitement des données 9 reçoit aussi des valeurs de vitesses angulaires estimées par les deux gyromètres, au moins pour la vitesse angulaire selon l'axe y et pour la vitesse angulaire selon l'axe z. Les axes y et z ne sont pas nécessairement orthogonaux. Les axes choisis pour mesurer les écarts au satellite (angles exprimés en degrés) sont différents de l'axe de pointage de l'antenne aligné dans la direction du satellite.

Le diagramme 12 de la figure 2 illustre la perte de SNR résultant d'un dépointage de l'antenne. Il dépend de la taille, la forme et la technologie de l'antenne ainsi que de la fréquence de fonctionnement.

Le procédé va rechercher au moins deux valeurs d'écarts au satellite, $\varepsilon_y$, $\varepsilon_z$, respectivement selon l'axe y de l'antenne et selon l'axe z de l'antenne.

Le SNR s'exprime en fonction des écarts, $\varepsilon_y$ et $\varepsilon_z$, des coefficients négatifs $K_1$ et $K_2$ liés à la réalisation l'antenne et d'une valeur de $SNR_0$ qui est inconnue :

$$SNR = K_1.\varepsilon_z^2 + K_2.\varepsilon_y^2 + SNR_0 \qquad (1).$$

La vitesse angulaire de l'antenne fournit une mesure de la dérivée temporelle de ces écarts $\dot{\varepsilon}_z$ et $\dot{\varepsilon}_y$.

$K_1$ et $K_2$ sont des coefficients ou des constantes liées au diagramme de l'antenne qui sont connues ou estimées, $SNR_0$ correspond à la valeur maximale du rapport signal à bruit disponible pour le système lorsqu'il n'y a pas de dépointage. La mise en œuvre de ces calculs (équ.3) requiert des mouvements de l'antenne et donc un dépointage, pour avoir une estimation correcte. Le dépointage peut être naturel, lié par exemple au bruit de mesure dans l'estimation naturellement présent dans le système, ou volontaire réalisé par un opérateur.

Selon une première variante de réalisation qui ne tient pas compte de la valeur du biais des mesures, la première étape de traitement exécutée au niveau du module de traitement consiste à exprimer le diagramme d'antenne en fonction du dépointage de l'antenne.

Pour un indice i d'une fenêtre de temps, la valeur du $SNR_i$ mesurée s'exprime de la manière suivante :

$$SNR_i = K_1 \cdot \left( \varepsilon_z - d\tau \sum_{j=1}^{i-1} \dot{\varepsilon}_{z_j} \right)^2 + K_2 \left( \varepsilon_y - d\tau \sum_{j=1}^{i-1} \dot{\varepsilon}_{y_j} \right)^2 + SNR_0$$

$$(3)$$

avec :

$\dot{\varepsilon}_{y_j}$, $\dot{\varepsilon}_{z_j}$ correspond à la vitesse angulaire, mesurée par les gyromètres et fait référence à la dérivée temporelle des valeurs d'écarts au satellite recherchés $\varepsilon_y$, $\varepsilon_z$,

i, variant de 1 à n, est l'indice d'une mesure dans la fenêtre de temps, composée de n mesures. n est un paramètre de réglage lié à la fenêtre de temps T = n. $d\tau$. Les grandeurs indicées 1 correspondent au pas de temps le plus récent, celles indicées n aux plus anciens.

j, variant de 1 à i-1 est l'indice d'une mesure précédant la mesure i,

$\dot{\varepsilon}_{zj}$ et $\dot{\varepsilon}_{yj}$ sont les vitesses angulaires mesurées par les gyromètres de l'antenne pour l'indice j,

$d\tau$ est la période d'échantillonnage, par exemple choisie en fonction de l'architecture du système, du capteur de réception des signaux, de manière à obtenir suffisamment d'informations pour obtenir une valeur représentative sans saturer le module de traitement, elle sera notamment fonction de la fréquence d'échantillonnage du signal balise.

La taille de la fenêtre temporelle est choisie de façon à avoir suffisament d'échantillons pour dissocier le signal utile du bruit, ceci selon des principes connus de l'homme du métier dans les traitements statistiques.

On cherche à estimer les paramètres $\widehat{\varepsilon}_z$, $\widehat{\varepsilon}_y$ et $\widehat{SNR}_0$ optimaux au sens des moindres carrés. C'est-à-dire les valeurs $\widehat{\varepsilon}_z$, $\widehat{\varepsilon}_y$ et $\widehat{SNR}_0$ qui minimisent la fonction de coût $J$. La fonction de coût représente la somme sur toute la fenêtre d'observation des erreurs au carré entre la mesure $SNR_i$ et la valeur estimée $\widehat{SNR}_i$ :

$$\widehat{SNR}_i = K_1 \cdot \left( \widehat{\varepsilon}_z - d\tau \sum_{j=1}^{i-1} \dot{\varepsilon}_{z_j} \right)^2 + K_2 \cdot \left( \widehat{\varepsilon}_y - d\tau \sum_{j=1}^{i-1} \dot{\varepsilon}_{y_j} \right)^2 + \widehat{SNR}_0$$

$$Err_i = \widehat{SNR}_i - SNR_i$$

$$J = \sum_{j=1}^{n} (p_i \cdot Err_i)^2$$

$p_i$ est un facteur de pondération choisi par l'opérateur.

Il est possible d'utiliser toute méthode de résolution des moindres carrés connue de l'homme du métier. Pour l'illustration de cet exemple, une approche linéaire est suivie.

L'équation (3) peut se mettre sous la forme :

$$SNR_i - K_1.\left(d\tau \sum_{j=1}^{i-1} \dot\varepsilon_{z_j}\right)^2 - K_2.\left(d\tau \sum_{j=1}^{i-1} \dot\varepsilon_{y_j}\right)^2 =$$

$$-2.\varepsilon_z.K_1.d\tau \sum_{j=1}^{i-1} \dot\varepsilon_{z_j} - 2.\varepsilon_y.K_2.d\tau \sum_{j=1}^{i-1} \dot\varepsilon_{y_j} + SNR_0 + K_2.\varepsilon_y^2 + K_1.\varepsilon_z^2 \quad (4)$$

L'étape suivante consiste à exprimer l'équation précédente (4) sous la forme d'un système linéaire en ses paramètres :

$$Y_i = SNR_i - K_1.\left(d\tau \sum_{j=1}^{i-1} \dot\varepsilon_{z_j}\right)^2 - K_2.\left(d\tau \sum_{j=1}^{i-1} \dot\varepsilon_{y_j}\right)^2$$

$$W_i = \left[-\sum_{j=1}^{i-1} \dot\varepsilon_{z_j} \quad -\sum_{j=1}^{i-1} \dot\varepsilon_{y_j} \quad 1\right]$$

$$X = \left[2.K_1.d\tau.\varepsilon_z \quad .2\,K_2.d\tau.\varepsilon_y \quad (SNR_0 + K_2.\varepsilon_y^2 + K_1.\varepsilon_z^2)\right](5)$$

avec :

- $\dot\varepsilon_{z_j},\ \dot\varepsilon_{y_j}$ : les vitesses angulaires mesurées par les gyromètres situés au niveau de l'antenne,
- $d\tau$ : la période d'échantillonnage,
- $i$ : l'indice de la mesure dans la fenêtre de temps, i e [1 $n$],
- $j$ : l'indice de la mesure précédant la mesure courante $i$, j e [1 ($i$ - 1)],
- $n$ : le nombre de mesures de vitesses angulaires utilisées dans la fenêtre de temps.

Avec une fenêtre de temps de $T$ secondes, et en exécutant les étapes précédemment décrites sur les n mesures, on obtient $\mathrm{n} = \dfrac{T}{d\tau}$ mesures de $W_i$ et $Y_i$, qui sont regroupées dans deux matrices A et Y s'exprimant de la manière suivante :

$$A = \begin{bmatrix} W_1 \\ \vdots \\ W_i \\ \vdots \\ W_n \end{bmatrix} = \begin{bmatrix} 0 & 0 & 1 \\ -\sum_{j=1}^{2} \dot{\varepsilon}_{z_j} & -\sum_{j=1}^{2} \dot{\varepsilon}_{y_j} & 1 \\ \vdots & \vdots & \vdots \\ -\sum_{j=1}^{i-1} \dot{\varepsilon}_{z_j} & -\sum_{j=1}^{i} \dot{\varepsilon}_{y_j} & 1 \\ \vdots & \vdots & \vdots \\ -\sum_{j=1}^{n-1} \dot{\varepsilon}_{z_j} & -\sum_{j=1}^{n-1} \dot{\varepsilon}_{y_j} & 1 \end{bmatrix}$$

$$Y = \begin{bmatrix} Y_1 \\ \vdots \\ Y_i \\ \vdots \\ Y_n \end{bmatrix} (6)$$

On obtient le système d'équation surdéterminé suivant : $Y = A.X$.

On estime le vecteur X en utilisant la méthode des moindres carrés ordinaires : $\hat{X} = (A^T \cdot A)^{-1} \cdot A^T \cdot Y$.

$A^T$ est la transposée de la matrice A.

On obtient une estimation des écarts angulaires $\widehat{\varepsilon_y}$, $\widehat{\varepsilon_z}$ à chaque nouvelle valeur de signal balise SNR à partir de l'estimation de X :

$$\hat{X} = \begin{bmatrix} \widehat{\eta_1} \\ \widehat{\eta_2} \\ \widehat{\eta_3} \end{bmatrix} = \begin{bmatrix} 2.K_1.d\tau.\widehat{\varepsilon_z} \\ 2.K_2.d\tau.\widehat{\varepsilon_y} \\ K_1.\widehat{\varepsilon_z}^2 + K_2.\widehat{\varepsilon_y}^2 + \widehat{SNR_0} \end{bmatrix} (7)$$

$$\widehat{\varepsilon_y} = \frac{\widehat{\eta_2}}{2.K_2.d\tau}$$

$$\widehat{\varepsilon_z} = \frac{\widehat{\eta_1}}{2.K_1.d\tau}.$$

A la fin de l'exécution des étapes décrites précédemment, le processeur dispose d'une valeur estimée pour l'écart au satellite suivant l'axe y et une valeur estimée pour l'écart au satellite selon l'axe z.

Les valeurs estimées $\widehat{\varepsilon_y}$, $\widehat{\varepsilon_z}$, pour les écarts au satellite sont ensuite comparées au niveau du module de traitement des données à une valeur de référence, la valeur « 0 » qui est la consigne d'écart nul ou une valeur proche de zéro. Si les valeurs des écarts au satellite estimées sont trop éloignées de cette valeur de référence ou prouvent l'existence d'un dépointage trop important, alors le module de traitement 9 va émettre un signal de commande Sr vers le contrôleur de position 10 de l'antenne afin de la repositionner (de la repointer) pour obtenir une valeur de SNR optimal.

La correction à apporter est réalisée en continu en utilisant une boucle d'asservissement qui permet à tout moment de faire tendre cette valeur d'écart vers zéro.

Lorsque le véhicule sur lequel est montée la station Satcom n'a pas un mouvement trop rapide, il est possible de déterminer l'écart non plus en continu, mais à des instants donnés.

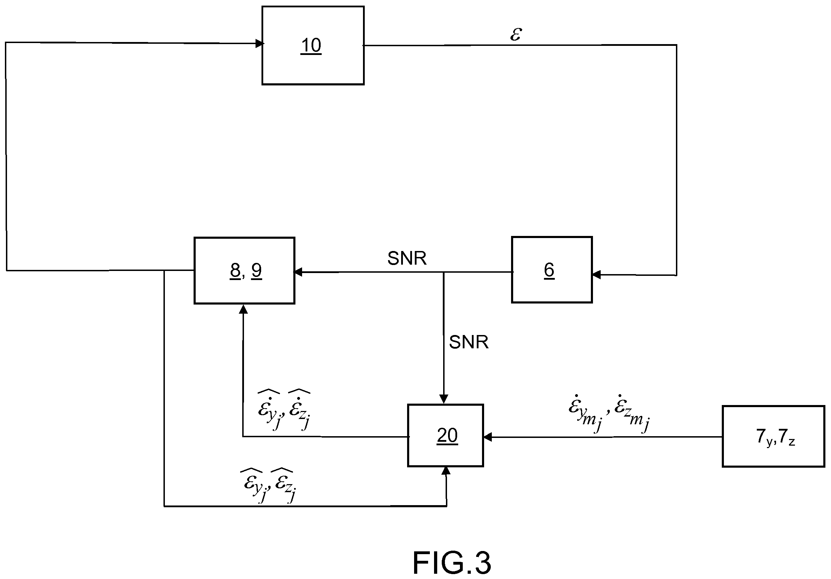

La figure 3 illustre une variante de réalisation qui tient compte du biais présent dans les vitesses angulaires mesurées.

La vitesse angulaire mesurée $\dot{\varepsilon}_m$ est égale à :

$$\dot{\varepsilon}_{\mathrm{m}} = \dot{\varepsilon} + b$$

avec

- $\dot{\varepsilon}$ : la vitesse angulaire vraie, non biaisée,
- $b$ : le biais de mesure à identifier.

L'objectif est de prendre en compte le biais de mesure afin de le supprimer et d'améliorer le calcul. L'hypothèse suivante est posée :

• Le biais est constant (varie lentement dans le temps par rapport aux autres signaux en jeux).

Pour un indice i, la valeur du $SNR_i$ mesurée s'exprime de la manière suivante :

$$SNR_i = K_1 \cdot \left( \varepsilon_z - d\tau \sum_{j=1}^{i-1} \dot{\varepsilon}_{z_j} \right)^2 + K_2 \left( \varepsilon_y - d\tau \sum_{j=1}^{i-1} \dot{\varepsilon}_{y_j} \right)^2 + SNR_0 \quad (8)$$

$$SNR_i = K_1 \cdot \left( \varepsilon_z - d\tau \sum_{j=1}^{i-1} (\dot{\varepsilon}_{z_{m_j}}) + (i-1) \cdot d\tau \cdot b_z \right)^2 +$$

$$K_2 \left( \varepsilon_y - d\tau \sum_{j=1}^{i-1} \left( \dot{\varepsilon}_{y_{m_j}} \right) + (i-1) \cdot d\tau \cdot b_y \right)^2 + SNR_0$$

avec :

- $\dot{\varepsilon}_{z_{m_j}}$, $\dot{\varepsilon}_{y_{m_j}}$ : les vitesses angulaires mesurées par les gyromètres de l'antenne,
- $b_z$, $b_y$ : biais des gyromètres de l'antenne,
- $d\tau$ : période d'échantillonnage,
- $i$ : indice de la mesure courante dans la fenêtre de temps, i e [1 $n$],
- $j$ : indice de la mesure précédant la mesure courante, j e [1 $(i - 1)$],
- $n$ : nombre de mesure utilisée dans la fenêtre de temps.

On détermine les estimés optimales $\widehat{\varepsilon_y}$, $\widehat{\varepsilon_z}$, $\widehat{b_z}$, $\widehat{b_y}$ et $\widehat{SNR_0}$ au sens des moindres carrés des paramètres $\varepsilon_z$, $\varepsilon_y$, $b_z$, $b_y$ et $SNR_0$. Il est possible d'utiliser toute méthode de résolution des moindres carrés connue de l'homme du métier.

Dans le cas où les paramètres $\widehat{\varepsilon_y}$, $\widehat{\varepsilon_z}$ sont préalablement connus, un estimateur de biais 20 est disposé entre le récepteur de signaux 6 et le module de traitement des données 9 (figure 1).
L'estimateur de biais 20 reçoit en entrée :

• La mesure de vitesse angulaire des gyromètres : $\dot{\varepsilon}_{y_m}$, $\dot{\varepsilon}_{z_m}$,
• La mesure de signal balise : $SNR_i$,

- L'estimation des écarts au satellite, c'est-à-dire la sortie du module de traitement des données 9 : $\widehat{\varepsilon_y}, \widehat{\varepsilon_z}$.

Dans ce cas où les valeurs estimées des écarts $\widehat{\varepsilon_z}, \widehat{\varepsilon_y}$ sont issues d'un module de traitement de données et utilisées comme entrées de l'estimateur de biais, une résolution par les moindres carrés ordinaires (linéaire) est utilisée pour calculer $\widehat{b_z}, \widehat{b_y}$ et $\widehat{SNR_0}$,

$$Y_{b_i} = W_{b_i}.X_b \qquad (9)$$

avec

$$Y_{b_i} = SNR_i - K_1\left(\widehat{\varepsilon_z} - d\tau\sum_{j=1}^{i-1}\dot{\varepsilon}_{z m_j}\right)^2 - K_2\left(\widehat{\varepsilon_y} - d\tau\sum_{j=1}^{i-1}\dot{\varepsilon}_{y m_j}\right)^2$$

$$W_{b_i} = \left[2.K_1\left(\widehat{\varepsilon_z} - d\tau\sum_{j=1}^{i-1}\dot{\varepsilon}_{z m_j}\right).(i-1).d\tau \quad 2.K_2.\left(\widehat{\varepsilon_y} - d\tau\sum_{j=1}^{i-1}\dot{\varepsilon}_{y m_j}\right).(i-1).d\tau \quad (i-1)^2.d\tau^2 \quad 1\right]$$

$A_b$ est la matrice regroupant $n$ lignes de $W_{bi}$. $Y_b$ est la matrice regroupant n lignes de $Y_{bi}$.

L'estimation $\widehat{X_b} = \left(A_b^T.A_b\right)^{-1}.A_b^T.Y_b$ permet d'estimer $\widehat{b_z}$ et $\widehat{b_y}$ et $\widehat{SNR_0}$ :

$$\widehat{X_b} = \left[\begin{array}{cccc}\widehat{b_z} & \widehat{b_y} & (K_1.\widehat{b_z^2} + K_2.b_y^2) & \widehat{SNR_0}\end{array}\right]^T$$

A partir de l'estimation du biais, $\widehat{b_z}$ et $\widehat{b_y}$, on calcule les vitesses angulaires, $\widehat{\dot{\varepsilon}_y}, \widehat{\dot{\varepsilon}_z}$ :

$$\widehat{\dot{\varepsilon}_{y_j}} = \dot{\varepsilon}_{y_{m_j}} - \widehat{b_y}$$

$$\widehat{\dot{\varepsilon}_{y_j}} = \dot{\varepsilon}_{y_{m_j}} - \widehat{b_y}$$

$$\widehat{\dot{\varepsilon}_{z_j}} = \dot{\varepsilon}_{z_{m_j}} - \widehat{b_z}.$$

Les vitesses angulaires estimées $\widehat{\dot{\varepsilon}_{y_j}}$ et $\widehat{\dot{\varepsilon}_{z_j}}$ sont alors utilisées comme entrées de $Y_i$ et $W_i$ (4) pour l'estimation suivante des écarts angulaires $\widehat{\varepsilon_y}$ et $\widehat{\varepsilon_z}$.

Si les valeurs des écarts au satellite estimées sont trop éloignées de cette valeur de référence ou prouvent l'existence d'un dépointage trop important, alors le module de traitement 9 va émettre un signal de commande Sr vers le contrôleur de position 10 de l'antenne afin de la repositionner (de la repointer) pour obtenir une valeur de SNR optimale.

Sans sortir du cadre de l'invention, il est possible d'utiliser n'importe quelle méthode de résolution linéaire (méthodes récursives des moindres carrés, moindres carrés pondérés, moindres carrés totaux etc.) ou non-linéaire (optimisation numérique).

Le procédé et le dispositif selon l'invention présentent, en plus d'assurer un pointage optimal de l'antenne dans la direction du satellite afin de conserver une valeur maximale de signal de suivi, les avantages suivants :

- Moins de capteurs nécessaires pour le suivi des satellites,
- Les valeurs des écarts estimées sont indépendantes de l'architecture du positionneur,
- Les mesures et les calculs en temps réel permettent une estimation des biais par le pointage,
- La mise en œuvre du procédé ne requiert pas de petits mouvements rapides contrôlés.

**Revendications**

1. Procédé pour conserver une direction de pointage d'une antenne dans l'axe d'un satellite **caractérisé en ce qu'**il exécute au moins les étapes suivantes :

   Pour i variant de 1 à n, n étant un nombre de mesures données,
   Mesurer une valeur d'un signal de tracking $SNR_i$ reçu depuis le satellite pour un instant donné,
   Exprimer la valeur du signal de tracking $SNR_i$ en fonction des paramètres $K_1$ et $K_2$ liés au diagramme de l'antenne, d'une période de temps j, et d'une valeur de rapport signal à bruit $SNR_0$ obtenue sans dépointage volontaire de l'antenne,

$$SNR_i = K_1 . \left( \varepsilon_z - d\tau \sum_{j=1}^{i-1} \dot{\varepsilon}_{zj} \right)^2 + K_2 . \left( \varepsilon_y - d\tau \sum_{j=1}^{i-1} \dot{\varepsilon}_{yj} \right)^2 + SNR_0$$

   avec :

   $\varepsilon_z$ et $\varepsilon_y$ des valeurs d'écarts au satellite,
   i variant de 1 à n, indice d'une mesure de SNR dans une fenêtre de temps donnée,
   j indice de la période de temps précédente d'indice i, on somme sur toutes les mesures précédentes,
   $\dot{\varepsilon}_{zj}$ et $\dot{\varepsilon}_{yj}$ les vitesses angulaires pour au moins deux axes y et z, différents de l'axe de pointage de l'antenne vers le satellite,
   $d\tau$ une période d'échantillonnage,

   Définir une fonction de coût à partir de la valeur de $SNR_i$ et de sa valeur estimée $\widehat{SNR}_i$

$$\widehat{SNR}_i = K_1 . \left( \widehat{\varepsilon}_z - d\tau \sum_{j=1}^{i-1} \dot{\varepsilon}_{zj} \right)^2 + K_2 . \left( \widehat{\varepsilon}_y - d\tau \sum_{j=1}^{i-1} \dot{\varepsilon}_{yj} \right)^2 + SNR_0$$

$$Err_i = \widehat{SNR}_i - SNR$$

$$J = \sum_{j=1}^{n} (p_i . Err_i)^2$$

   $p_i$ est un facteur de pondération choisi par l'opérateur,

   Trouver les paramètres optimaux $\widehat{\varepsilon}_y$ et $\widehat{\varepsilon}_z$ au sens des moindres carrés,
   c'est-à-dire minimisant la fonction J à chaque pas de temps,
   Utiliser le résultat de la comparaison des valeurs estimées à la valeur de référence pour conserver la direction de pointage.

2. Procédé selon la revendication 1 **caractérisé en ce que** :

on exprime la valeur SNR sous la forme d'un système linéaire en regroupant les résultats des n mesures dans une première matrice A exprimant les $\sum_{j=1}^{i-1} \dot{\varepsilon}_{z_J}$ et les $\sum_{j=1}^{i-1} \dot{\varepsilon}_{y_J}$ et une deuxième matrice X regroupant les valeurs d'écart au satellite et la valeur de rapport signal à bruit $SNR_0$,

on estime un vecteur X à partir du système linéaire Y=AX en utilisant une méthode des moindres carrés ordinaire, pour chaque nouvelle valeur de signal de balise SNR, on déduit une valeur d'écart angulaire $\widehat{\varepsilon_y}$, selon l'axe y et une deuxième valeur angulaire estimée $\widehat{\varepsilon_z}$ selon l'axe z :

$$Y_i = SNR_i - K_1.\left(d\tau \sum_{j=1}^{i-1} \dot{\varepsilon}_{z_J}\right)^2 - K_2.\left(d\tau \sum_{j=1}^{i-1} \dot{\varepsilon}_{y_J}\right)^2$$

$$W_i = \left[ -\sum_{j=1}^{i-1} \dot{\varepsilon}_{z_J} \quad -\sum_{j=1}^{i-1} \dot{\varepsilon}_{y_J} \quad 1 \right]$$

$$X = \left[ 2.K_1.d\tau.\varepsilon_z \quad 2.K_2.d\tau.\varepsilon_y \quad (SNR_0 + K_2.\varepsilon_y^2 + K_1.\varepsilon_z^{\,2}) \right]$$

avec

- $\dot{\varepsilon}_{z_J}, \dot{\varepsilon}_{y_j}$ : les vitesses angulaires mesurées par des gyromètres situés au niveau de l'antenne,
- $d\tau$ : la période d'échantillonnage,
- $i$ : l'indice de la mesure dans la fenêtre de temps, i e [1..*n*],
- $j$ : l'indice de la mesure précédant la mesure courante *i*,
- $n$ : le nombre de mesures utilisées dans la fenêtre de temps,

les $\mathrm{n} = \dfrac{T}{d\tau}$ mesures de $W_i$ et $Y_i$, sont regroupées dans deux matrices A et Y:

$$A = \begin{bmatrix} W_1 \\ \vdots \\ W_i \\ \vdots \\ W_n \end{bmatrix} = \begin{bmatrix} 0 & 0 & 1 \\ -\sum_{j=1}^{2} \dot{\varepsilon}_{z_J} & -\sum_{j=1}^{2} \dot{\varepsilon}_{y_J} & 1 \\ \vdots & \vdots & \vdots \\ -\sum_{j=1}^{i-1} \dot{\varepsilon}_{z_J} & -\sum_{j=1}^{i-1} \dot{\varepsilon}_{y_J} & 1 \\ \vdots & \vdots & \vdots \\ -\sum_{j=1}^{n-1} \dot{\varepsilon}_{z_J} & -\sum_{j=1}^{n-1} \dot{\varepsilon}_{y_J} & 1 \end{bmatrix}$$

$$Y = \begin{bmatrix} Y_1 \\ \vdots \\ Y_i \\ \vdots \\ Y_n \end{bmatrix}$$

On estime le vecteur X en utilisant une méthode des moindres carrés ordinaire : $\hat{X} = (A^T \cdot A)^{-1} \cdot A^T \cdot Y$, $A^T$ étant la transposée de la matrice *A,*

On obtient une estimation $\widehat{\dot{\varepsilon}_y}$, $\widehat{\dot{\varepsilon}_z}$, pour chacune des vitesses angulaires $\dot{\varepsilon}_{zj}$ $\dot{\varepsilon}_{yj}$ à partir de l'estimation de X :

$$\hat{X} = \begin{bmatrix} \widehat{\eta_1} \\ \widehat{\eta_2} \\ \widehat{\eta_3} \end{bmatrix} = \begin{bmatrix} 2.K_1.d\tau.\widehat{\dot{\varepsilon}_z} \\ 2.K_2.d\tau.\widehat{\dot{\varepsilon}_y} \\ K_1.\widehat{\dot{\varepsilon}_z}^2 + K_2.\widehat{\dot{\varepsilon}_y}^2 + SNR_0 \end{bmatrix}$$

$$\widehat{\dot{\varepsilon}_y} = \frac{\widehat{\eta_2}}{2.K_2.d\tau} \quad \text{et} \quad \widehat{\dot{\varepsilon}_z} = \frac{\widehat{\eta_1}}{2.K_1.d\tau} .$$

**3.** Procédé selon la revendication 1 **caractérisé en ce que** l'on prend en compte les biais de mesure des vitesses angulaires et on exécute les étapes suivantes :

On exprime :

$$SNR_i = K_1.\left( \dot{\varepsilon}_z - d\tau \sum_{j=1}^{i-1} (\dot{\varepsilon}_{z_{m_j}}) + (i-1).d\tau.b_z \right)^2 +$$

$$K_2 \left( \dot{\varepsilon}_y - d\tau \sum_{j=1}^{i-1} (\dot{\varepsilon}_{y_{m_j}}) + (i-1).d\tau.b_y \right)^2 + SNR_0$$

avec :

- $\dot{\varepsilon}_{z_{mj}}$ $\dot{\varepsilon}_{y_{mj}}$ : les vitesses angulaires mesurées par les gyromètres de l'antenne,
- $b_z$, $b_y$ : les biais des gyromètres de l'antenne,
- $d\tau$ : la période d'échantillonnage,
- *i* : l'indice de la mesure courante dans la fenêtre de temps, i e [1 ... *n*],
- *j :* l'indice de la mesure précédant la mesure courante *i,*
- *n* : le nombre de mesures utilisées dans la fenêtre de temps,

On détermine les estimations optimales $\widehat{\dot{\varepsilon}_z}$, $\widehat{\dot{\varepsilon}_y}$, $\widehat{b_z}$ et $\widehat{b_y}$ et $\widehat{SNR}_0$ des paramètres $\dot{\varepsilon}_z$, $\dot{\varepsilon}_y$, $b_z$, $b_y$ et $SNR_0$ au sens des moindres carrés.

**4.** Procédé selon la revendication 3 **caractérisé en ce que** l'on exprime le problème d'estimation des biais sous la forme d'un système linéaire dans le cas où les estimées des écarts $\widehat{\dot{\varepsilon}_z}$, $\widehat{\dot{\varepsilon}_y}$, sont issues d'un module de traitement de données et utilisés comme entrées de l'estimateur de biais

$$Y_{b_i} = W_{b_i}.X_b$$

avec

$$Y_{b_i} = SNR_i - K_1\left(\widehat{\varepsilon_z} - d\tau \sum_{j=1}^{i-1} \dot{\varepsilon}_{z_{m_j}}\right)^2 - K_2\left(\widehat{\varepsilon_y} - d\tau \sum_{j=1}^{i-1} \dot{\varepsilon}_{y_{m_j}}\right)^2$$

$$W_{b_i} = \left[2.K_1\left(\widehat{\varepsilon_z} - d\tau \sum_{j=1}^{i-1} \dot{\varepsilon}_{z_{m_j}}\right).(i-1).d\tau \quad 2.K_2.\left(\widehat{\varepsilon_y},- d\tau \sum_{j=1}^{i-1} \dot{\varepsilon}_{y_{m_j}}\right).(i-1).d\tau \quad (i-1)^2.d\tau^2 \quad 1\right]$$

$A_b$ est la matrice regroupant *n* lignes de $W_{bi}$. $Y_b$ est la matrice regroupant n lignes de $Y_{bi}$.

L'estimation $\hat{X}_b = (A_b{}^T.A_b)^{-1}. A_b{}^T. Y_b$ permet d'estimer les biais $\widehat{b_z}$ et $\widehat{b_y}$ :

$$\widehat{X_b} = \begin{bmatrix} \widehat{b_z} & \widehat{b_y} & (K_1.\widehat{b_z{}^2} + K_2.b_y{}^2) & \widehat{SNR_0} \end{bmatrix}^T$$

On estime les biais $\widehat{b_z}$ et $\widehat{b_y}$, puis on calcule les vitesses angulaires, $\widehat{\dot{\varepsilon}_y}, \widehat{\dot{\varepsilon}_z}$

$$\widehat{\dot{\varepsilon}_{y_j}} = \dot{\varepsilon}_{y_{m_j}} - \widehat{b_y}$$

$$\widehat{\dot{\varepsilon}_{z_j}} = \dot{\varepsilon}_{z_{m_j}} - \widehat{b_z}.$$

5. Procédé selon l'une des revendications 1 à 3 **caractérisé en ce que** les deux axes y et z pour déterminer des vitesses angulaires sont orthogonaux.

6. Procédé selon l'une des revendications 1 à 4 **caractérisé en ce que** l'on utilise la valeur zéro comme valeur de référence pour l'asservissement.

7. Procédé selon l'une des revendications 1 à 4 **caractérisé en ce que** l'on utilise pour l'estimation un mouvement de l'antenne en continu, généré par n'importe quel phénomène faisant bouger le faisceau de l'antenne par rapport au satellite (1), tel qu'un bruit de mesure, une flexibilité mécanique, une erreur d'asservissement, ou un mouvement volontaire réalisé par un opérateur.

8. Procédé selon l'une des revendications précédentes **caractérisé en ce que** l'on estime en continu la valeur des écarts angulaires et on utilise une boucle d'asservissement pour maintenir en position l'antenne dans une direction de pointage optimale.

9. Dispositif pour conserver une direction de pointage d'une antenne dans l'axe d'un satellite **caractérisé en ce qu'**il comporte au moins les éléments suivants :

   Un module de mesure d'une valeur d'un signal *SNR*$_i$ émis par le satellite pour un instant i,
   Un dispositif de détermination d'au moins une première vitesse angulaire et d'au moins une deuxième vitesse angulaire au niveau de l'antenne, pour au moins deux axes y et z, non orthogonaux et différents de l'axe de pointage de l'antenne vers le satellite,
   Un module de traitement des données (9) configuré pour exécuter les étapes du procédé selon l'une des revendications 1 à 8, recevant les valeurs mesurées des vitesses angulaires, la valeur du rapport signal sur bruit mesurée SNR et générant un signal de commande à un dispositif de correction des écarts angulaires (10).

10. Dispositif selon la revendication 9 **caractérisé en ce que** le dispositif permettant de déterminer les vitesses angulaires est un gyromètre (7y, 7z).

11. Dispositif selon la revendication 9 **caractérisé en ce que** le dispositif permettant de déterminer les vitesses angulaires comprend un estimateur de biais des mesures (20).

12. Dispositif selon l'une des revendications 9 ou 10 **caractérisé en ce qu'**il comporte une boucle d'asservissement configurée pour corriger en continu un écart angulaire.

**Patentansprüche**

1. Verfahren zum Halten einer Ausrichtung einer Antenne in der Achse eines Satelliten, **dadurch gekennzeichnet, dass** es mindestens die folgenden Schritte ausführt:

   für i, das von 1 bis n variiert, wobei n eine Anzahl von gegebenen Messungen ist:

   Messen eines Wertes eines Nachführsignals $SNR_i$, empfangen vom Satelliten für einen gegebenen Zeitpunkt, Ausdrücken des Wertes des Nachführsignals $SNR_i$ als Funktion der Parameter $K_1$ und $K_2$ in Verbindung mit dem Antennendiagramm, einer Zeitperiode j und eines Signal-Rausch-Verhältniswertes $SNR_0$, der ohne absichtliche Ausrichtungsänderung der Antenne erhalten wird:

$$SNR_i = K_1 . \left( \varepsilon_z - d\tau \sum_{j=1}^{i-1} \dot{\varepsilon}_{zj} \right)^2 + K_2 . \left( \varepsilon_y - d\tau \sum_{j=1}^{i-1} \dot{\varepsilon}_{yj} \right)^2 + SNR_0$$

   wobei:

   $\varepsilon_z$ und $\varepsilon_y$ Satellitenabweichungswerte sind,
   i, das von 1 bis n variiert, der Index einer SNR-Messung in einem gegebenen Zeitfenster ist,
   j der Index der vorherigen Zeitperiode von Index i ist, Summieren über alle vorherigen Messungen,
   $\dot{\varepsilon}_{zj}$ und $\dot{\varepsilon}_{yj}$ die Winkelgeschwindigkeiten für mindestens zwei y- und z-Achsen sind, die sich von der Ausrichtungsachse der Antenne zum Satelliten unterscheiden,
   $d\tau$ eine Abtastperiode ist,

   Definieren einer Kostenfunktion auf der Basis des Wertes von $SNR_1$ und seines Schätzwertes $\widehat{SNR}_i$

$$\widehat{SNR}_i = K_1 . \left( \widehat{\varepsilon}_z - d\tau \sum_{j=1}^{i-1} \dot{\varepsilon}_{zj} \right)^2 + K_2 . \left( \widehat{\varepsilon}_y - d\tau \sum_{j=1}^{i-1} \dot{\varepsilon}_{yj} \right)^2 + SNR_0$$

$$Err_i = \widehat{SNR}_i - SNR$$

$$J = \sum_{j=1}^{n} (p_i . Err_i)^2$$

   $p_i$ ein vom Bediener gewählter Gewichtungsfaktor ist,

   Finden der optimalen Parameter $\widehat{\varepsilon}_y$ und $\widehat{\varepsilon}_z$ im Sinne der kleinsten Quadrate, d.h. unter Minimierung der Funktion J bei jedem Zeitschritt,
   Nutzen des Ergebnisses des Vergleichs der geschätzten Werte mit dem Referenzwert, um die Ausrichtung zu halten.

2.  Verfahren nach Anspruch 1, **gekennzeichnet durch**:

Ausdrücken des SNR-Wertes in Form eines linearen Systems durch Gruppieren der Ergebnisse von n Messungen in einer ersten Matrix A, die $\sum_{j=1}^{i-1} \dot{\varepsilon}_{z_J}$ und $\sum_{j=1}^{i-1} \dot{\varepsilon}_{y_J}$ ausdrückt, und einer zweiten Matrix X, die die Abweichungswerte zum Satellit und den Signal-Rausch-Verhältniswert $SNR_0$ gruppiert,

Schätzen eines Vektors X auf der Basis des linearen Systems Y=AX durch Anwenden einer gewöhnlichen Methode der kleinsten Quadrate für jeden neuen Bakensignalwert SNR, Ableiten eines Winkelabweichungswerts $\widehat{\varepsilon}_y$ entlang der y-Achse und eines zweiten geschätzten Winkelwertes $\widehat{\varepsilon}_z$ entlang der z-Achse:

$$Y_i = SNR_i - K_1 \cdot \left( d\tau \sum_{j=1}^{i-1} \dot{\varepsilon}_{z_J} \right)^2 - K_2 \cdot \left( d\tau \sum_{j=1}^{i-1} \dot{\varepsilon}_{y_J} \right)^2$$

$$W_i = \left[ -\sum_{j=1}^{i-1} \dot{\varepsilon}_{z_J} \quad -\sum_{j=1}^{i-1} \dot{\varepsilon}_{y_J} \quad 1 \right]$$

$$X = \left[ 2 \cdot K_1 \cdot d\tau \cdot \varepsilon_z \quad 2 \cdot K_2 \cdot d\tau \cdot \varepsilon_y \quad (SNR_0 + K_2 \cdot \varepsilon_y^2 + K_1 \cdot \varepsilon_z^{\,2}) \right]$$

wobei:

- $\dot{\varepsilon}_{z_j}, \dot{\varepsilon}_{y_j}$ die von Gyrometern an der Antenne gemessenen Winkelgeschwindigkeiten sind,
- $d\tau$ die Abtastperiode ist,
- *i* der Index der Messung im Zeitfenster i e [1.. *n*] ist,
- *j* der Index der der aktuellen Messung i vorausgehenden Messung ist,
- *n* die Anzahl der im Zeitfenster benutzten Messungen ist,

die $n = \dfrac{T}{d\tau}$ Messungen von $W_i$ und $Y_i$ werden in zwei Matrizen A und Y gruppiert:

$$A = \begin{bmatrix} W_1 \\ \vdots \\ W_i \\ \vdots \\ W_n \end{bmatrix} = \begin{bmatrix} 0 & 0 & 1 \\ -\sum_{j=1}^{2} \dot{\varepsilon}_{z_J} & -\sum_{j=1}^{2} \dot{\varepsilon}_{y_J} & 1 \\ \vdots & \vdots & \vdots \\ -\sum_{j=1}^{i-1} \dot{\varepsilon}_{z_J} & -\sum_{j=1}^{i-1} \dot{\varepsilon}_{y_J} & 1 \\ \vdots & \vdots & \vdots \\ -\sum_{j=1}^{n-1} \dot{\varepsilon}_{z_J} & -\sum_{j=1}^{n-1} \dot{\varepsilon}_{y_J} & 1 \end{bmatrix}$$

$$Y = \begin{bmatrix} Y_1 \\ \vdots \\ Y_i \\ \vdots \\ Y_n \end{bmatrix}$$

Schätzen des Vektors X mit einer gewöhnlichen Methode der kleinsten Quadrate: $\hat{X} = (A^T.A)^{-1}. A^T.Y$, wobei $A^T$ *die* Transponierte der Matrix *A* ist,

Einholen einer Schätzung $\widehat{\dot{\varepsilon}_y}$, $\widehat{\dot{\varepsilon}_z}$ für jede der Winkelgeschwindigkeiten $\dot{\varepsilon}_{z_j}$, $\dot{\varepsilon}_{y_j}$ auf der Basis der Schätzung von X:

$$\hat{X} = \begin{bmatrix} \widehat{\eta_1} \\ \widehat{\eta_2} \\ \widehat{\eta_3} \end{bmatrix} = \begin{bmatrix} 2.K_1.d\tau.\widehat{\dot{\varepsilon}_z} \\ 2.K_2.d\tau.\widehat{\dot{\varepsilon}_y} \\ K_1.\widehat{\dot{\varepsilon}_z}^2 + K_2.\widehat{\dot{\varepsilon}_y}^2 + SNR_0 \end{bmatrix}$$

$$\widehat{\dot{\varepsilon}_y} = \frac{\widehat{\eta_2}}{2.K_2.d\tau} \text{ and } \widehat{\dot{\varepsilon}_z} = \frac{\widehat{\eta_1}}{2.K_1.d\tau}.$$

3. Verfahren nach Anspruch 1, **dadurch gekennzeichnet, dass** die Verzerrungen der Winkelgeschwindigkeitsmessungen berücksichtigt werden und die folgenden Schritte ausgeführt werden:

Ausdrücken von:

$$SNR_i = K_1.\left( \varepsilon_z - d\tau \sum_{j=1}^{i-1} (\dot{\varepsilon}_{z_{m_j}}) + (i-1).d\tau.b_z \right)^2 +$$

$$K_2 \left( \varepsilon_y - d\tau \sum_{j=1}^{i-1} \left( \dot{\varepsilon}_{y_{m_j}} \right) + (i-1).d\tau.b_y \right)^2 + SNR_0$$

wobei:

- $\dot{\varepsilon}_{z_{mj}}$, $\dot{\varepsilon}_{y_{mj}}$ die von den Gyrometern der Antenne gemessenen Winkelgeschwindigkeiten sind,
- **$b_z$, $b_y$** die Verzerrungen der Gyrometer der Antenne sind,
- **$d\tau$** die Abtastperiode ist,
- **$i$** der Index der aktuellen Messung im Zeitfenster i e [1... *n*], ist,
- **$j$** der Index der der aktuellen Messung i vorausgehenden Messung ist,
- **$n$** die Anzahl der im Zeitfenster benutzten Messungen ist,

Bestimmen der optimalen Schätzungen $\widehat{\dot{\varepsilon}_z}$, $\widehat{\dot{\varepsilon}_y}$, $\widehat{b_z}$ und $\widehat{b_y}$ und $\widehat{SNR}_0$ der Parameter $\dot{\varepsilon}_z$, $\dot{\varepsilon}_y$, $b_z$, $b_y$ und $SNR_0$ im Sinne der kleinsten Quadrate.

4. Verfahren nach Anspruch 3, **dadurch gekennzeichnet, dass** das Problem des Schätzens von Verzerrungen in Form eines linearen Systems ausgedrückt wird, wenn die Schätzungen $\widehat{\dot{\varepsilon}_z}$, $\widehat{\dot{\varepsilon}_y}$, der Abweichungen von einem Datenverarbeitungsmodul ausgegeben und als Eingänge in den Verzerrungsschätzer verwendet werden:

$$Y_{b_i} = W_{b_i} . X_b$$

mit:

$$Y_{b_i} = SNR_i - K_1 \left( \widehat{\varepsilon_z} - d\tau \sum_{j=1}^{i-1} \dot{\varepsilon}_{z_{m_j}} \right)^2 - K_2 \left( \widehat{\varepsilon_y} - d\tau \sum_{j=1}^{i-1} \dot{\varepsilon}_{y_{m_j}} \right)^2$$

$$W_{b_i} = \left[ 2.K_1 \left( \widehat{\varepsilon_z} - d\tau \sum_{j=1}^{i-1} \dot{\varepsilon}_{z_{m_j}} \right) . (i-1).d\tau \quad 2.K_2 \left( \widehat{\varepsilon_y} - d\tau \sum_{j=1}^{i-1} \dot{\varepsilon}_{y_{m_j}} \right) . (i-1).d\tau \quad (i-1)^2.d\tau^2 \quad 1 \right]$$

wobei $A_b$ die Matrix ist, die $n$ Zeilen von $W_{b_i}$ gruppiert; $Y_b$ die Matrix ist, die n Zeilen von $Y_{b_i}$ gruppiert, das Schätzen von $\hat{X}_b = (A_b^T \cdot A_b)^{-1} . A_b^T . Y_b$ das Schätzen der Verzerrungen $\widehat{b_z}$ und $\widehat{b_y}$ ermöglicht:

$$\widehat{X_b} = \left[ \widehat{b_z} \quad \widehat{b_y} \quad (\widehat{K_1.b_z^2 + K_2.b_y^2}) \quad \widehat{SNR_0} \right]^T$$

wobei die Verzerrungen $\widehat{b_z}$ und $\widehat{b_y}$ geschätzt werden, und dann der Winkelgeschwindigkeiten $\widehat{\dot{\varepsilon}_y}$, $\widehat{\dot{\varepsilon}_z}$ berechnet werden

$$\widehat{\dot{\varepsilon}_{y_j}} = \dot{\varepsilon}_{y_{m_j}} - \widehat{b_y}$$

$$\widehat{\dot{\varepsilon}_{z_j}} = \dot{\varepsilon}_{z_{m_j}} - \widehat{b_z}.$$

5. Verfahren nach einem der Ansprüche 1 bis 3, **dadurch gekennzeichnet, dass** die beiden Achsen y und z zum Bestimmen der Winkelgeschwindigkeiten orthogonal sind.

6. Verfahren nach einem der Ansprüche 1 bis 4, **dadurch gekennzeichnet, dass** der Nullwert als Referenzwert für die Regelung verwendet wird.

7. Verfahren nach einem der Ansprüche 1 bis 4, **dadurch gekennzeichnet, dass** zum Schätzen eine kontinuierliche Antennenbewegung, erzeugt durch ein beliebiges Phänomen, das eine Bewegung des Antennenstrahls in Bezug auf den Satelliten (1) verursacht, wie z.B. Messrauschen, eine mechanische Flexibilität, ein Regelfehler oder eine absichtliche Bewegung durch einen Bediener benutzt wird.

8. Verfahren nach einem der vorherigen Ansprüche, **dadurch gekennzeichnet, dass** der Wert der Winkelabweichungen kontinuierlich geschätzt und eine Regelschleife zum Inpositionhalten der Antenne in einer optimalen Ausrichtung benutzt wird.

9. Vorrichtung zum Halten der Ausrichtung einer Antenne in der Achse eines Satelliten, **dadurch gekennzeichnet, dass** sie mindestens die folgenden Elemente umfasst:

ein Modul zum Messen eines Wertes $SNR_i$ eines Signals, das von dem Satelliten für einen Zeitpunkt i emittiert wird,
eine Vorrichtung zum Bestimmen mindestens einer ersten Winkelgeschwindigkeit und mindestens einer zweiten Winkelgeschwindigkeit an der Antenne, für mindestens zwei Achsen y und z, die nicht orthogonal sind und sich von der Antennenausrichtungsachse zum Satelliten unterscheiden,

ein Datenverarbeitungsmodul (9), konfiguriert zum Ausführen der Schritte des Verfahrens nach einem der Ansprüche 1 bis 8, das der Messwerte der Winkelgeschwindigkeiten, des Wertes des gemessenen Signal-Rausch-Verhältnisses SNR empfängt, und ein Steuersignal für eine Winkelabweichungskorrekturvorrichtung (10) erzeugt.

10. Vorrichtung nach Anspruch 9, **dadurch gekennzeichnet, dass** die Vorrichtung zum Bestimmen der Winkelgeschwindigkeiten ein Gyrometer (7y, 7z) ist.

11. Vorrichtung nach Anspruch 9, **dadurch gekennzeichnet, dass** die Vorrichtung zum Bestimmen der Winkelgeschwindigkeiten einen Messverzerrungsschätzer (20) umfasst.

12. Vorrichtung nach Anspruch 9 oder 10, **dadurch gekennzeichnet, dass** sie eine Regelschleife umfasst, die zum kontinuierlichen Korrigieren einer Winkelabweichung konfiguriert ist.

**Claims**

1. Method for preserving a pointing direction of an antenna in the axis of a satellite, **characterized in that** it executes at least the following steps:

for i varying from 1 to n, n being a number of given measurements,
measuring a value of a tracking signal $SNR_i$ received from the satellite for a given time,
expressing the value of the tracking signal $SNR_i$ as a function of parameters $K_1$ and $K_2$ related to the pattern of the antenna, of a time period j, and of a value of the signal-to-noise ratio $SNR_0$ obtained without voluntary off-pointing of the antenna,

$$SNR_i = K_1.\left(\varepsilon_z - d\tau \sum_{j=1}^{i-1} \dot{\varepsilon}_{zj}\right)^2 + K_2.\left(\varepsilon_y - d\tau \sum_{j=1}^{i-1} \dot{\varepsilon}_{yj}\right)^2 + SNR_0$$

with:

$\varepsilon_z$ and $\varepsilon_y$ being values of deviations to the satellite,
i varying from 1 to n, being the index of an SNR measurement in a given time window,
j being the index of the time period preceding that of an index i, all the preceding measurements are summed,
$\dot{\varepsilon}_{zj}$ and $\dot{\varepsilon}_{yj}$ being the angular velocities for at least two axes y and z that are different from the pointing axis of the antenna pointing towards the satellite,
$d\tau$ being a sampling period,

defining a cost function from the value $SNR_i$ and from its estimated value $\widehat{SNR}_i$

$$\widehat{SNR}_i = K_1.\left(\widehat{\varepsilon_z} - d\tau \sum_{j=1}^{i-1} \dot{\varepsilon}_{zj}\right)^2 + K_2.\left(\widehat{\varepsilon_y} - d\tau \sum_{j=1}^{i-1} \dot{\varepsilon}_{yj}\right)^2 + SNR_0$$

$$Err_i = \widehat{SNR}_i - SNR$$

$$J = \sum_{j=1}^{n} (p_i.Err_i)^2$$

$p_i$ is a weighting factor chosen by the operator,

finding the optimal parameters $\widehat{\varepsilon_y}$ and $\widehat{\varepsilon_z}$ in the least-squares sense, i.e. those minimizing the function J in each time interval,

using the result of the comparison of the estimated values to the reference value to preserve the pointing direction.

2. Method according to claim 1, **characterized in that**:

the SNR value is expressed in the form of a linear system by grouping the results of the n measurements in a first matrix A expressing the $\sum_{j=1}^{i-1} \dot{\varepsilon}_{zJ}$ and the $\sum_{j=1}^{i-1} \dot{\varepsilon}_{yJ}$ and a second matrix X grouping the values of deviation to the satellite and the value of the signal-to-noise ratio $SNR_0$,

a vector X is estimated from the linear system Y=AX using an ordinary least-squares method, for each new beacon signal value SNR, and an angular deviation value $\widehat{\varepsilon_y}$ along the y-axis and an second estimated angular value $\widehat{\varepsilon_z}$ along the z-axis are deduced:

$$Y_i = SNR_i - K_1.\left(d\tau \sum_{j=1}^{i-1} \dot{\varepsilon}_{z_J}\right)^2 - K_2.\left(d\tau \sum_{j=1}^{i-1} \dot{\varepsilon}_{y_J}\right)^2$$

$$W_i = \left[-\sum_{j=1}^{i-1} \dot{\varepsilon}_{z_J} \quad -\sum_{j=1}^{i-1} \dot{\varepsilon}_{y_J} \quad 1\right]$$

$$X = \left[2.K_1.d\tau.\varepsilon_z \quad 2.K_2.d\tau.\varepsilon_y \quad (SNR_0 + K_2.\varepsilon_y^2 + K_1.\varepsilon_z^2)\right]$$

with

- $\dot{\varepsilon}_{z_j}, \dot{\varepsilon}_{y_j}$ : the angular velocities measured by gyrometers located on the antenna,
- $d\tau$: the sampling period,
- $i$: the index of the measurement in the time window, i e [1.. $n$],
- $j$: the index of the measurement preceding the current measurement $i$,
- $n$: the number of measurements used in the time window,

the $n = \dfrac{T}{d\tau}$ measurements of $W_i$ and $Y_i$ are grouped into two matrices A and Y:

$$A = \begin{bmatrix} W_1 \\ \vdots \\ W_i \\ \vdots \\ W_n \end{bmatrix} = \begin{bmatrix} 0 & 0 & 1 \\ -\sum_{j=1}^{2} \dot{\varepsilon}_{z_j} & -\sum_{j=1}^{2} \dot{\varepsilon}_{y_j} & 1 \\ \vdots & \vdots & \vdots \\ -\sum_{j=1}^{i-1} \dot{\varepsilon}_{z_j} & -\sum_{j=1}^{i-1} \dot{\varepsilon}_{y_j} & 1 \\ \vdots & \vdots & \vdots \\ -\sum_{j=1}^{n-1} \dot{\varepsilon}_{z_j} & -\sum_{j=1}^{n-1} \dot{\varepsilon}_{y_j} & 1 \end{bmatrix}$$

$$Y = \begin{bmatrix} Y_1 \\ \vdots \\ Y_i \\ \vdots \\ Y_n \end{bmatrix}$$

the vector X is estimated using an ordinary least-squares method: $\hat{X} = (A^T.A)^{-1}.A^T. Y$, $A^T$ being the transpose of the matrix $A$,

an estimate $\widehat{\dot{\varepsilon}_y}$, $\widehat{\dot{\varepsilon}_z}$ is obtained for each of the angular velocities $\dot{\varepsilon}_{z}$, $\dot{\varepsilon}_{y}$, from the estimate of X:

$$\hat{X} = \begin{bmatrix} \widehat{\eta_1} \\ \widehat{\eta_2} \\ \widehat{\eta_3} \end{bmatrix} = \begin{bmatrix} 2.K_1.d\tau.\widehat{\dot{\varepsilon}_z} \\ 2.K_2.d\tau.\widehat{\dot{\varepsilon}_y} \\ K_1.\widehat{\dot{\varepsilon}_z}^2 + K_2.\widehat{\dot{\varepsilon}_y}^2 + SNR_0 \end{bmatrix}$$

$$\widehat{\dot{\varepsilon}_y} = \frac{\widehat{\eta_2}}{2.K_2.d\tau} \quad \text{and} \quad \widehat{\dot{\varepsilon}_z} = \frac{\widehat{\eta_1}}{2.K_1.d\tau}.$$

3.  Method according to claim 1, **characterized in that** the bias in the measurement of the angular velocities is taken into account and the following steps are executed:

$$SNR_i = K_1.\left( \dot{\varepsilon}_z - d\tau \sum_{j=1}^{i-1} (\dot{\varepsilon}_{z_{m_j}}) + (i-1).d\tau.b_z \right)^2 +$$

$$K_2\left( \dot{\varepsilon}_y - d\tau \sum_{j=1}^{i-1} (\dot{\varepsilon}_{y_{m_j}}) + (i-1).d\tau.b_y \right)^2 + SNR_0$$

is expressed
with:

- $\dot{\varepsilon}_{z_{mj}}$, $\dot{\varepsilon}_{y_{mj}}$ : the angular velocities measured by the gyrometers of the antenna,

- $b_z$, $b_y$ : the biases of the gyrometers of the antenna,
- $d\tau$: the sampling period,
- *i*: the index of the current measurement in the time window, i e [1 ... *n*],
- *j* : the index of the measurement preceding the current measurement *i*,
- *n*: the number of measurements used in the time window,

the optimal estimates $\widehat{\varepsilon_z}$, $\widehat{\varepsilon_y}$, $\widehat{b_z}$ and $\widehat{b_y}$ and $\widehat{SNR_0}$ of the parameters $\varepsilon_z$, $\varepsilon_y$, $b_z$, $b_y$ and $SNR_0$ in the least-squares sense are determined.

4. Method according to claim 3, **characterized in that** the problem of estimating the biases is expressed in the form of a linear system in the case where the estimates $\widehat{\varepsilon_z}$, $\widehat{\varepsilon_y}$, of the deviations are obtained from a data-processing module and used as inputs of the bias estimator

$$Y_{b_i} = W_{b_i}.X_b$$

with

$$Y_{b_i} = SNR_i - K_1 \left( \widehat{\varepsilon_z} - d\tau \sum_{j=1}^{i-1} \dot{\varepsilon}_{z_{m_j}} \right)^2 - K_2 \left( \widehat{\varepsilon_y} - d\tau \sum_{j=1}^{i-1} \dot{\varepsilon}_{y_{m_j}} \right)^2$$

$$W_{b_i} = \left[ 2.K_1 \left( \widehat{\varepsilon_z} - d\tau \sum_{j=1}^{i-1} \dot{\varepsilon}_{z_{m_j}} \right).(i-1).d\tau \quad 2.K_2.\left( \widehat{\varepsilon_y} - d\tau \sum_{j=1}^{i-1} \dot{\varepsilon}_{y_{m_j}} \right).(i-1).d\tau \quad (i-1)^2.d\tau^2 \quad 1 \right]$$

$A_b$ being the matrix grouping together *n* rows of $W_{b_i}$, $Y_b$ being the matrix grouping together n rows of $Y_{b_i}$.

the estimate $\hat{X}_b = (A_b{}^T.A_b)^{-1}.A_b{}^T.Y_b$ makes it possible for the biases $\widehat{b_z}$ and $\widehat{b_y}$ to be estimated:

$$\widehat{X_b} = \left[ \widehat{b_z} \quad \widehat{b_y} \quad (K_1.\widehat{b_z{}^2} + K_2.b_y{}^2) \quad \widehat{SNR_0} \right]^T$$

the biases $\widehat{b_z}$ and $\widehat{b_y}$ being estimated and the angular velocities $\widehat{\varepsilon_y}$, $\widehat{\varepsilon_z}$ then being computed

$$\widehat{\dot{\varepsilon}_{y_j}} = \dot{\varepsilon}_{y_{m_j}} - \widehat{b_y}$$

$$\widehat{\dot{\varepsilon}_{z_j}} = \dot{\varepsilon}_{z_{m_j}} - \widehat{b_z}.$$

5. Method according to one of claims 1 to 3, **characterized in that** the two axes y and z used to determine the angular velocities are orthogonal.

6. Method according to one of claims 1 to 4, **characterized in that** the value zero is used as reference value for the servo control.

7. Method according to one of claims 1 to 4, **characterized in that**, for the estimation, a continuous movement of the antenna is used, said movement being generated by any effect that makes the beam of the antenna move with respect to the satellite (1), such as a measurement noise, a mechanical flexibility, a servo-control error, or a voluntary movement produced by an operator.

8. Method according to one of the preceding claims, **characterized in that** the value of the angular deviations is continuously estimated and a servo-control loop is used to keep the antenna positioned in an optimal pointing direction.

9. Device for preserving a pointing direction of an antenna in the axis of a satellite, **characterized in that** it comprises at least the following elements:

   a module for measuring a value $SNR_i$ of a signal emitted by the satellite for a time i,
   a device for determining at least one first angular velocity and at least one second angular velocity at the antenna, for at least two axes y and z that are not orthogonal and that are different from the pointing axis of the antenna pointing towards the satellite,
   a data-processing module (9) configured to execute the steps of the method according to one of claims 1 to 8, which receives the measured values of the angular velocities, the value of the measured signal-to-noise ratio SNR and which generates a control signal for a device (10) for correcting the angular deviations.

10. Device according to claim 9, **characterized in that** the device allowing the angular velocities to be determined is a gyrometer (7y, 7z).

11. Device according to claim 9, **characterized in that** the device allowing the angular velocities to be determined comprises an estimator (20) of the bias of the measurements.

12. Device according to one of claims 9 and 10, **characterized in that** it comprises a servo-control loop, configured to continuously correct an angular deviation.

FIG.1

EP 3 654 549 B1

FIG.2

FIG.3

**RÉFÉRENCES CITÉES DANS LA DESCRIPTION**

**Documents brevets cités dans la description**

- US 2006273958 A

**Littérature non-brevet citée dans la description**

- **E. BROUSSARD et al.** *Hybrid satellite position estimator using self-induced dither for SATCOM on the move,* 2017